# EUROPEAN PATENT APPLICATION

(11) **EP 2 104 348 A2**
(43) Date of publication of application: **23.09.2009**
(21) Application number: 09153669.8
(22) Date of filing: 25.02.2009
(51) Int. Cl.: H04N 7/16

(54) **Virtual IPTV-VOD system with remote satellite reception of satellite delivered VOD content and method of providing same**

(30) Priority: 25.02.2008 US 67207 P
(71) Applicant: Globecomm Systems, Inc., Hauppauge, NY 11788 (US)
(72) Inventor: Ruhnke, William, New York, NY 11222 (US); Feldman, Jonathan K., Los Angeles, CA (US)
(74) Representative: Bardini, Marco Luigi

(57) **Abstract**

A virtual system and method is provided for delivery of Video-On-Demand content. The system comprises one or more communications satellites, i.e., domestic and/or international, positioned and adapted for receiving and relaying packet data communications encapsulating a selected video file. A satellite receiver at a first location or remote node acquires and collects the packet data from the one or more satellites and a buffer computer also at the first location, and in proximity to the receiver, re-compiles the packet data into its original video file from beginning to completion. A Video-On-Demand server is positioned at a second location or main node, remote from the first location, for distributing the video file to one or more Internet Protocol Television subscribers over an interactive communications network. The buffer computer at the remote node is linked seamlessly to the Video-On-Demand server at the main node via an Internet-based Virtual Private Network.

## Description

The present invention relates generally to communications networks and, more particularly, to networks operating over satellite for point-to-point applications.

Conventional Internet Protocol Television ("IPTV") systems deliver digital television services through Internet Protocol over a communications network infrastructure, which may include delivery by a broadband connection. Significantly, Internet Protocol Television content is provided to subscribers in formats characteristic of computer networks, rather than those of traditional broadcast and cable delivery.

In residential applications, for instance, Internet Protocol Television services are provided to subscribers in conjunction with Video-On-Demand ("VOD"). Since the subscriber content is provided in computer network-based formats, the services are readily "bundled" with Internet access services as well as Voice-Over-Internet Protocol (or "VoIP"), such bundling collectively being referred to as "Triple Play" service. In business applications, Internet Protocol Television is used, for example, to deliver television content over corporate Local Area Networks (or "LANS").

Internet Protocol Television services are usually distributed by a service provider to subscribers through a closed network infrastructure. These services and their providers compete directly with major Internet Service Providers ("ISPs") that deliver television content over the public Internet, i.e., "Internet Television".

Concurrently with Internet Protocol Television, Video-On-Demand ("VOD") systems allow subscribers to select and watch video content, at will. These systems either stream content through a TV set-top box, allowing viewing in real-time, or download it to a personal computer, digital video recorder ("DVR"), or personal video recorder for viewing at a later time. Most cable television-based service providers offer both Video-On-Demand streaming, such as pay-per-view. Using pay-per-view, the subscriber purchases or selects a movie or television program, and it either begins to play on the television set almost instantaneously or is downloaded to a digital video recorder rented from the provider, for viewing at a later time.

The foregoing discussion is provided for purposes of illustration and is not intended to limit the environment of the present invention. The remaining structural and functional aspects of video-based content systems are known by those skilled in the art and further description is considered unnecessary for illustration of the present invention.

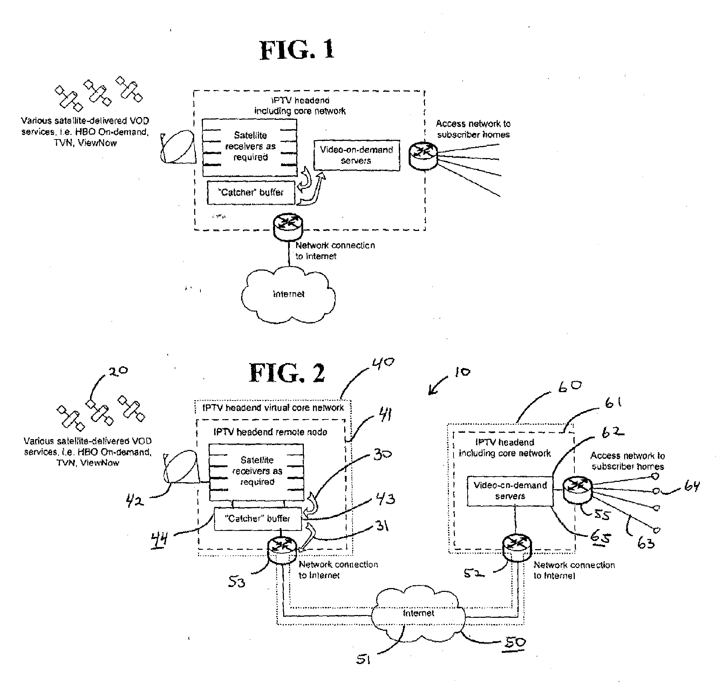

Traditional Video-On-Demand installations at Internet Protocol Television head-ends provide a core network at a single location, the network including a plurality of satellite receivers, a buffer computer known as a "catcher", and a Video-On-Demand server. Briefly, as illustrated generally in FIG. 1, satellite delivered Video-On-Demand content is typically received from satellite, as a secure, encrypted signal, and amassed at the buffer computer until reception of the video file is complete. The completed video file is then moved over an internal Ethernet network to the Video-On-Demand server, while optionally passing through an encryption process to add conditional access to home subscribers of Video-On-Demand services.

The Internet Protocol Television head-end also has a connection to the Internet, typically through an appropriate router, for example, of a known type, to provide Internet connectivity to users on the network. Traditionally, suppliers of Video-On-Demand video content via satellite authorize an Internet Protocol Television operator to receive the Video-On-Demand content from satellite at the Internet Protocol Television head-end, process it for conditional access and DRM, as may be required by the content owner, and place it on the Video-On-Demand servers at the authorized Internet Protocol Television head-end, where it is available for on-demand viewing by the subscribers. Video content provider agreements and regulations generally require that reception, in general, and satellite receivers, in particular, be associated with specific/designated the Internet Protocol Television head-ends, with appropriate restrictions on retransmission of video files.

While conventional Internet Protocol Television head-end arrangements have been found useful, placement of the satellite receiver and catcher in proximity to the Video-On-Demand server is often problematic where the server's location is unsuitable geographically and topographically for acquiring and collecting Video-On-Demand related packet data from satellites. These arrangements have also been found costly and burdensome in requiring that all Video-On-Demand content for millions of home subscribers be channeled through a single closed network infrastructure.

Accordingly, it is an object of the present invention to establish a virtual private network connection between a remote node and authorized Internet Protocol Television head-end(s), such that the remote node appears for all intents and purposes to be directly connected to the authorized Internet Protocol Television head-end(s).

It is another object of the present invention is to locate a satellite reception node remotely a selected distance from the rest of an authorized Internet Protocol Television head-end, connect them seamlessly to one another via a virtual private network, such that the receiver logically remains a device within the Internet Protocol Television head-end and is, therefore, in compliance with any requirement that reception occur at the authorized Internet Protocol Television system.

It is a further object of the present invention to insure that with a satellite reception node located remotely a selected distance from the rest of an authorized Internet Protocol Television head-end, all traffic between the remote node and the head end is encrypted virtual private network data, so that no usable video files are sent from the remote node to the head-end.

Still another object of the present invention is to provide a "virtual" Internet Protocol Television head-end core network that utilizes the public Internet, rather than conventional internal or closed network arrangements, to distribute video files distributed over satellite to authorized subscriber access networks of Video-On-Demand operators.

It is yet another object of the present invention to provide a bifurcated Internet Protocol Television head-end, where a remote reception node with satellite receiver and buffer computer may be positioned more easily, for instance, because the receiver is already in place, thereby obviating the need to install satellite receive dishes at the head-end location where space for such dishes may be unavailable.

A further object of the present invention is to provide a single remote satellite reception node that enables reception of Video-On-Demand content for multiple authorized Internet Protocol Television systems.

It is still a further object of the present invention to provide a bifurcated Internet Protocol Television head-end, where a remote reception node may be located at a single, remote facility where additional operational/maintenance-related services that are desired and readily available, but may not be otherwise available at individual head-end base nodes.

Another object of the present invention is to provide an arrangement that simplifies deployment of a Video-On-Demand service at an authorized Internet Protocol Television head-end in that the head-end need only install a Virtual Private Network connection, which is simpler and much less expensive than installation of satellite dishes and receivers for each head-end.

According to one aspect of the present invention, a virtual system is provided for delivery of Video-On-Demand content, which comprises one or more communications satellites positioned and adapted for receiving and relaying packet data communications encapsulating a selected video file; a satellite receiver at a first location for acquiring and collecting the packet data from the one or more satellites; a buffer computer at the first location, in proximity to the receiver, for re-compiling the packet data into its original video file from beginning to completion; a Video-On-Demand server at a second location, remote from the first location, for distributing the video file to one or more Internet Protocol Television subscribers over an interactive communications network; and an Internet-based, virtual private network for seamless linkage of the buffer computer to the Video-On-Demand servers over the respective remote locations.

In accordance with another aspect of the present invention, there is provided a virtual system for delivery of Video-On-Demand content, which comprises one or more communications satellites positioned and adapted for receiving and relaying packet data communications encapsulating one or more selected video files; a plurality of receivers at a first location for acquiring and collecting the packet data from the one or more satellites; one or more buffer computers at the first location, each being associated with and in proximity to one of the receivers, for re-compiling the packet data into their respective one or more original selected video files from beginning to completion; a plurality of Video-On-Demand servers, each at an independent location remote from the first location and associated with one or more Video-On-Demand operator, for distributing the one or more video files to one or more Internet Protocol Television subscribers over an interactive communications network; and one or more Internet-based virtual private networks for seamless linkage of the respective buffer computers to the Video-On-Demand servers over the respective locations.

According to a further aspect of the present invention, a virtual system is provided for delivery of Video-On-Demand content, which comprises one or more communications satellites positioned and adapted for receiving and relaying packet data communications encapsulating a selected video file; a shared receiver at a first location for acquiring and collecting the packet data from the one or more satellites; a shared buffer computer at the first location, in proximity to the receiver, for re-compiling the packet data into its original video file from beginning to completion; a plurality of Video-On-Demand servers, each at an independent location remote from the first location and associated with one of a plurality of Video-On-Demand operators, for distributing the video file to one or more Internet Protocol Television subscribers over an interactive communications network; and a plurality of Internet-based, virtual private networks, each network being associated with one of the Video-On-Demand operators, for seamless linkage of the shared buffer computer to the Video-On-Demand server associated with the one Video-On-Demand operator, over the respective locations.

In accordance with still another aspect of the present invention, there is provided a virtual system for delivery of Video-On-Demand content, which comprises one or more communications satellites positioned and adapted for receiving and relaying packet data communications encapsulating a selected video file; a virtual private receiver at a first location for acquiring and collecting the packet data from the one or more satellites; a virtual private buffer computer at the first location, in proximity to the receiver, for re-compiling the packet data into its original video file from beginning to completion; and a plurality of Video-On-Demand servers, each at an independent location remote from the first location and associated with one of a plurality of Video-On-Demand operators, for distributing the video file to one or more Internet Protocol Television subscribers over an interactive communications network; and an Internet-based, virtual private network for seamless linkage of the virtual private buffer computer to the Video-On-Demand server over the respective locations.

According to yet a further aspect of the present invention, a method is provided for delivery of Video-On-Demand content over a virtual Internet Protocol Television network. Initially, a satellite receiver is positioned at a first location for acquiring and collecting packet data communications, encapsulating a selected video file, from one or more communications satellites. Next, a buffer computer is placed at the first location, and in proximity to the receiver, for re-compiling the packet data into its original video file from beginning to completion. A network connection is provided from the buffer computer to a global interactive communications network such as the Internet. A Video-On-Demand server is then arranged at a second location, remote from the first location, for distributing the video file to one or more Internet Protocol Television subscribers over an interactive communications network. A secure network connection is also provided from the server to the global interactive communications network. Finally, an Internet-based virtual private network is provided for seamlessly linking the buffer computer to the Video-On-Demand server over the respective locations.

In accordance with still a further method of operation, the satellite receiver at the first location acquires and collects packet data communications, encapsulating the selected video file, from one or more communications satellites, and transfers the data to the buffer computer. The buffer computer placed at the first location, and in proximity to the receiver, then re-compiles the packet data into its original video file from beginning to completion, and transmits the file, through a router and over the Internet to the Video-On-Demand server arranged at the second location, remote from the first location. The server distributes the video file to one or more Internet Protocol Television subscribers over an interactive communications network. The Internet-based virtual private network provides seamless linkage of the buffer computer to the Video-On-Demand server over the respective locations.

The present invention will now be further illustrated by the following drawings which are not intended to limit this disclosure.
FIG. 1 is a schematic diagram of a conventional Internet Protocol Television, Video-On-Demand architecture for satellite delivered Video-On-Demand content;
FIG. 2 is a schematic diagram of a virtual network architecture for Video-On-Demand using remotely located satellite reception equipment, according to one embodiment of the present invention;
FIG. 3 illustrates a remote node of the virtual network architecture shown in FIG. 2;
FIG. 4 shows a base node of the virtual network architecture set forth in FIG. 2;
FIG. 5 is a schematic diagram of a virtual network architecture for Video-On-Demand using remotely located satellite reception equipment, according to another embodiment of the present invention; and
FIG. 6 is a schematic diagram of a virtual network architecture for Video-On-Demand using remotely located satellite reception equipment, according to a further embodiment of the present invention.

The same numerals are used throughout the figure drawings to designate similar elements. Still other objects and advantages of the present invention will become apparent from the follow-ing description of the preferred embodiments.

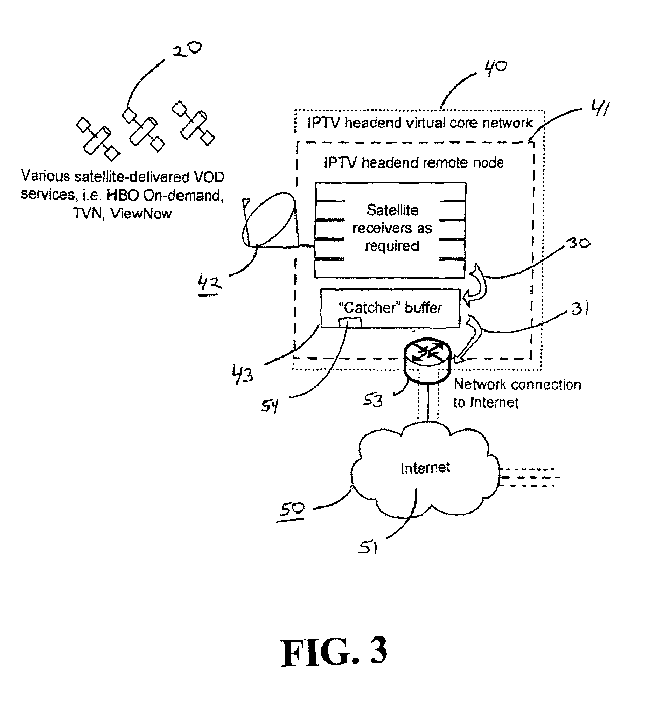

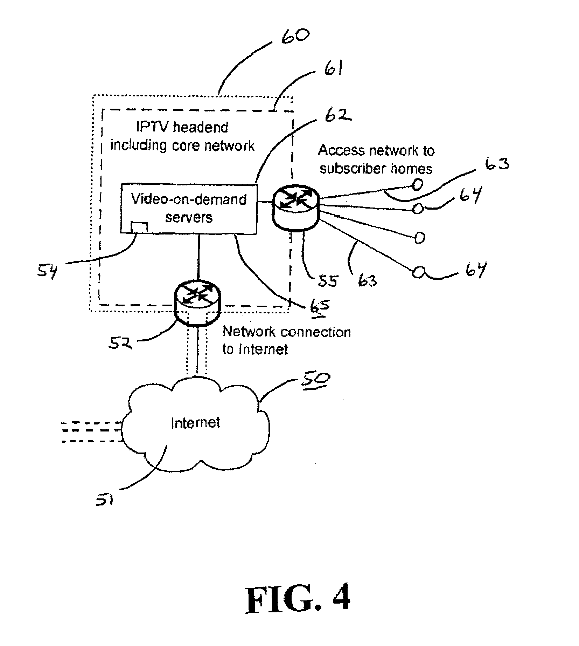

Referring now to the drawings and, more particularly, to FIGS. 2-6, there is shown generally a specific, illustrative virtual system 10 for delivery of Video-On-Demand content, according to various aspects of the present invention. In one embodiment, illustrated in FIGS. 2-4, the system comprises one or more communications satellites 20, i.e., traditional domestic and/or international satellites, positioned and adapted for, or at least capable of, receiving and relaying packet data communications 30 encapsulating a selected video file 31. A receiver 42, e.g., including a conventional satellite dish, at a first location or remote node 41 acquires and collects the packet data from the one or more satellites and a buffer computer or "catcher" 43, such as of a known type, at the first location, in proximity to the receiver, re-compiles the packet data into its original video file, e.g., and/or file format, from beginning to completion.

A Video-On-Demand server 62, e.g., also conventional, is positioned at a second location or base node 61, remote from the first location, for distributing video file 31 to one or more authorized Internet Protocol Television subscribers 64 over an interactive communications network 63 for access to the subscribers, e.g., home subscribers. The buffer computer is linked seamlessly across the respective locations to the Video-On-Demand server via a global interactive communications network 50, such as the Internet, and preferably over an Internet-based Virtual Private Network ("VPN") 51.

More specifically, the present invention provides a "virtual" core network 11 that includes a plurality of authorized Internet Protocol Television head-ends 40, 60, one head-end 40 being remote node 41 located at the first location with one or more satellite receivers 42 and one or more catchers 43, and the other head-end 60 being at least one Internet Protocol Television head-end base node 61, each base node having Video-On-Demand server 62 under operation of an authorized Cable TV provider or authorized Internet Service Provider ("ISP"). By locating the Video-On-Demand server at a location separate from the satellite receiver(s) and catcher(s), the present invention is desirably not limited to use with a "true" Internet Protocol Television system

According to one arrangement, in the remote node of the virtual core network, the requisite satellite receiver(s) and catcher(s) are located together as part of a single operative unit 44, and are placed in relatively close proximity to one another, such as components of the same operating installation, or in any combination thereof. While the satellite receiver(s) and catcher(s) are shown and described herein as being conventional, other receiver and/or catcher arrangements may be utilized, alternatively or concurrently therewith, giving consideration to the purpose for which the present invention is intended.

Video-On-Demand server 62, which comprises a proximal network 65 at head-end base node 61, is connected to global interactive communications network 50 using a suitable first router 52, e.g., a conventional data router, and is located a selected distance from the remote node, for instance, in another city, state, country or even on another continent. Completed video files are then moved from the catcher to the Video-On-Demand server, e.g., a conventional server, over Internet-based Virtual Private Network 51, e.g., a traditional Virtual Private Network.

Similarly, the remote node of the virtual core network includes a connection to the Internet, preferably through a selected second router 53, for example, a router of a known type, to provide Internet connectivity to between catcher(s) 43 of the remote node, at the first location, and Video-On-Demand server(s) 62 at the second location.

Preferably, no video files are sent from the remote head-end node to base head-end node, as all traffic between the remote node and base node desirably does not constitute one or more integral video files, i.e., a usable video file, but rather is indecipherable raw data that permits the video file to emerge intact after traversing the Virtual Private Network connection. Optionally, for added security, the buffer computer and Video-On-Demand server are provided with encryption processing 54 such that all traffic between the Virtual Private Network endpoints, i.e., the remote node and base node head end, is securely encrypted Virtual Private Network data.

By employing appropriately selected routers at both the remote node and head-end base node, a Virtual Private Network connection is established between them, such that the remote node appears for all intents and purposes to be directly connected to the Internet Protocol Television head-end. In one embodiment of the present invention, the Virtual Private Network connection is "tunneled", such as by known arrangements, through the public Internet. Alternatively or concurrently, rather than operating over the public Internet, the connection established between the remote node and base node head-end utilizes one or more leased lines, one or more fiber optic lines, a selected wireless Internet Protocol data link, and/or any other private line or Internet Protocol network connection capable of supporting a Virtual Private Network.

Advantageously, by locating satellite reception remotely a selected distance from the rest of the authorized Internet Protocol Television head-end, and connecting the same seamlessly via Virtual Private Network, the present invention provides a system wherein the received video data from satellite receiver(s) and catcher(s), over a Virtual Private Network to the rest of the authorized Internet Protocol Television system, logically remains within the Internet Protocol Television head-end and, therefore, complies with any requirement set by video content providers that reception occur at the authorized Internet Protocol Television system.

More specifically, because the satellite receiver(s) and catcher(s) remain part of the Internet Protocol Television head-end, and further conveyance of the video data received and compiled occurs over a Virtual Private Network to the rest of the Internet Protocol Television system, the distribution of video data to Video-On-Demand server(s) over the public Internet appropriately complies with requirements of video content providers.

Generally speaking, the present invention includes, but is not limited to, the following arrangements: (i) providing a satellite receiver and a catcher for each authorized Video-On-Demand operator or service provider; (ii) providing one satellite receiver and one catcher (i.e., a shared satellite receiver and a shared catcher) where each authorized Video-On-Demand operator has its own Virtual Private Network; (iii) providing a virtual private receiver and a virtual private catcher for each authorized Video-On-Demand operator; and/or (iv) providing one or more receivers and one or more catchers for one or more authorized Video-On-Demand operators.

According to the latter arrangement, rather than share a catcher among multiple authorized Internet Protocol Television systems, each Internet Protocol Television system has its own designated catcher, or its own relay computer, or a designated partition on a shared catcher or relay computer, so as to have a physical device at the remote node that is logically a part of the Internet Protocol Television system's core network.

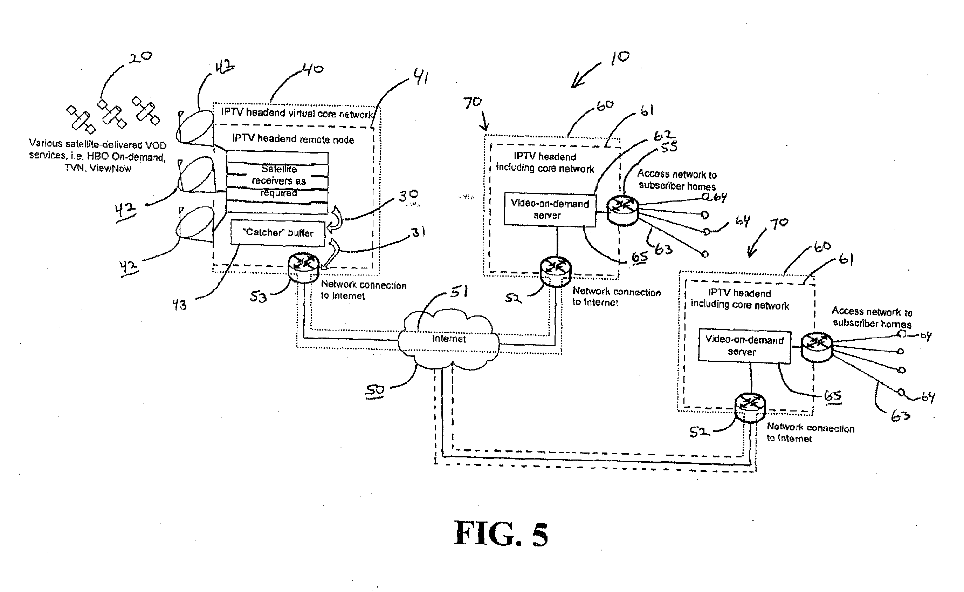

Turning now to another aspect of the present invention, a virtual system is provided for delivery of Video-On-Demand content. As shown in FIG. 5, the system comprises one or more communications satellites 20, i.e., domestic and/or international, positioned and adapted for, or at least capable of, receiving and relaying packet data communications 30 encapsulating one or more selected video files 31. A plurality of satellite receivers 42 at a first location or remote node 41 acquire and collect the packet data from the one or more satellites. One or more buffer computers 43 are also provided at the first location, each being associated with and in proximity to one of the receivers, for re-compiling the packet data into their original one or more selected video files from beginning to completion.

In addition, a plurality of Video-On-Demand servers 62 are provided, each at an independent location remote from the first location and associated with one or more authorized Video-On-Demand operators 70, for distributing the one or more video files to one or more authorized Internet Protocol Television subscribers 64 over interactive communications network 63 such as using a router 55, as known by those skilled in the art. Similarly, one or more Internet-based virtual private networks 51 facilitate seamless linkage of the respective buffer computers to the Video-On-Demand servers over the respective locations.

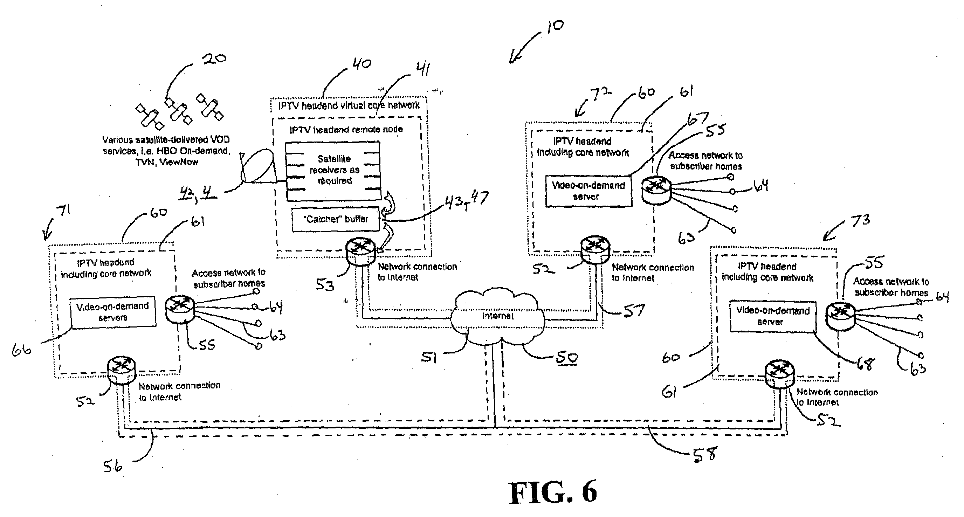

Alternatively, the virtual system is provided with a shared receiver 44 at the first location for acquiring and collecting the packet data from the one or more satellites, and a shared buffer computer 45 at the first location, in proximity to the receiver, for re-compiling the packet data into its video file from beginning to completion. Concurrently, a plurality of Video-On-Demand servers 66, 67, 68 are provided, each at an independent location remote from the first location and associated with one of a plurality of authorized Video-On-Demand operators 71, 72, 73 for distributing the video file to one or more authorized Internet Protocol Television subscribers over interactive communications network 63. A plurality of Internet-based virtual private networks 56, 57, 58 each network being associated with one or more of the authorized Video-On-Demand operators, is provided for seamless linkage of the shared buffer computer to the Video-On-Demand server associated with the one Video-On-Demand operator, over the respective locations. A system of this general description is shown, for instance, in FIG. 6.

Further in the alternative, or concurrently therewith, a virtual private receiver 46 is provided at the first location for acquiring and collecting the packet data from the one or more satellites. A virtual private buffer computer 47, also at the first location, and in proximity to the receiver, re-compiles the packet data into its original video file from beginning to completion. A plurality of Video-On-Demand servers 66, 67, each at an independent location remote from the first location and associated with one of a plurality of authorized Video-On-Demand operators, then distribute the video file to one or more authorized Internet Protocol Television subscribers 64 over interactive communications network 63. Internet-based, virtual private network 51 seamlessly links the virtual private buffer computer to the Video-On-Demand server over the respective remote locations.

Overall, by locating satellite reception remotely from the Internet Protocol Television head-end and Video-On-Demand servers, the present invention provides numerous economic and technical benefits. First, because authorized Internet Protocol Television systems typically endeavor to receive the same video content, a single remote satellite reception node enables reception of Video-On-Demand content for multiple authorized Internet Protocol Television systems. Hence, no matter how many Internet Protocol Television systems are subsequently sent the Video-On-Demand content each over their own Virtual Private Network connection, actual reception of video content, according to the present invention, need only occur once, requiring only one satellite receiver, or set of satellite receivers, and one catcher, or catcher system.

Another benefit of the present invention is that its remote "reception" node may be located at a single, remote facility where additional operational/maintenance-related services that are desired and readily available, but are not otherwise available at every head-end base node. Such services include, but are not limited to, Internet Protocol Television monitoring for quality, redundancy for system backup, transcoding or other digital processing of video files that are in an undesirable format to make them into the desired format, and personnel that may be needed for maintenance, repair, or routine operational functions.

Alternatively or concurrently, the remote reception node of the present invention is advantageously located where satellite reception is more suitable, geographically and/or topographically. In this manner, Video-On-Demand content can now be conveyed through the Virtual Private Network(s) to head-ends that may be geographically or topographically unable to "see" the satellite. Further in the alternative or concurrently therewith, remote reception node is positioned where reception is easy because, for instance, receive dishes are already in place, thereby obviating the need to install satellite receive dishes at the head-end location where space for such dishes may be unavailable.

Moreover, the present invention simplifies deployment of a Video-On-Demand service at an authorized Internet Protocol Television head-end. In particular, the head-end need only install a Virtual Private Network connection, which is simpler and much less expensive than installation of satellite dishes and receivers for each head-end.

In operation, a method is provided for delivery of Video-On-Demand content over a virtual Internet Protocol Television network. Initially, the satellite receiver is positioned at the first location for acquiring and collecting packet data communications, encapsulating the selected video file, from one or more communications satellites, i.e., domestic and/or international. Next, the buffer computer is placed at the first location, and in proximity to the receiver, for re-compiling the packet data into its original video file from beginning to completion. A network connection is provided from the buffer computer to a global interactive communications network such as the Internet. The Video-On-Demand server is then arranged at the second location, remote from the first location, for distributing the video file to one or more authorized Internet Protocol Television subscribers over an interactive communications network. A secure network connection is similarly provided from the server to the global interactive communications network. Finally, the Internet-based virtual private network is provided for seamlessly linking the buffer computer to the Video-On-Demand server over the respective locations.

In accordance with another method of operation, the satellite receiver at the first location acquires and collects packet data communications, encapsulating the selected video file, from one or more communications satellites, i.e., domestic and/or international, and transfers the data to the buffer computer, placed at the first location, and in proximity to the receiver. The buffer computer then re-compiles the packet data into its original video file from beginning to completion, and transmits the file, through a router and over the Internet to the Video-On-Demand server arranged at the second location, remote from the first location. The server distributes the video file to one or more authorized Internet Protocol Television subscribers over an interactive communications network. The Internet-based virtual private network provides seamless linkage of the buffer computer to the Video-On-Demand server over the respective locations.

Therefore, a virtual system for delivery of Video-On-Demand content according to one aspect of the invention comprises one or more communications satellites positioned and adapted for receiving and relaying packet data communications encapsulating a selected video file; a satellite receiver at a first location for acquiring and collecting the packet data from the one or more satellites; a buffer computer also at the first location, and in proximity to the receiver, for re-compiling the packet data into its original video file from beginning to completion; a Video-On-Demand server at a second location, remote from the first location, for distributing the video file to one or more Internet Protocol Television subscribers over an interactive communications network; and an Internet-based virtual private network for seamlessly linking the buffer computer to the Video-On-Demand server over the respective locations.

In an embodiment, the satellite receiver and buffer computer are associated with only one Video-On-Demand operator. In another embodiment, the satellite receiver and buffer computer are shared by a plurality of Video-On-Demand operators, each Video-On-Demand operator having its own virtual private network. The first location can be geographically and topographically suitable for acquiring and collecting the packet data from the one or more satellites, and the second location is geographically and topographically less suitable than the first location for acquiring and collecting the packet data from the one or more satellites.

The buffer computer can be associated with a first router for connection to the Internet, and the Video-On-Demand server is associated with a second router for connection to the Internet.

According to another aspect of the invention, a virtual system for delivery of Video-On-Demand content comprises one or more communications satellites positioned and adapted for receiving and relaying packet data communications encapsulating one or more selected video files; a plurality of satellite receivers at a first location for acquiring and collecting the packet data from the one or more satellites; one or more buffer computers at the first location, each being associated with and in proximity to one of the receivers, for re-compiling the packet data into the one or more original selected video files from beginning to completion; a plurality of Video-On-Demand servers, each at an independent location remote from the first location and associated with one or more Video-On-Demand operators, for distributing the one or more video files to one or more Internet Protocol Television subscribers over an interactive communications network; and one or more Internet-based virtual private networks for seamless linkage of the respective buffer computers to the Video-On-Demand servers over the respective locations. In an embodiment, each virtual private network is tunneled through the Internet. In an another embodiment, each virtual private network operates over a dedicated or shared landline connection. In a still another embodiment, each virtual private network operates over a selected Internet protocol network connection suitable for supporting a virtual private network.

The first location can be geographically and topographically suitable for acquiring and collecting the packet data from the one or more satellites, and the second location is geographically and topographically less suitable than the first location for acquiring and collecting the packet data from the one or more satellites. Each buffer computer can be associated with a first router for connection to the Internet, and each Video-On-Demand server is associated with a second router for connection to the Internet.

According to still another aspect of the invention, a virtual system for delivery of Video-On-Demand content comprises one or more communications satellites positioned and adapted for receiving and relaying packet data communications encapsulating a selected video file; a shared receiver at a first location for acquiring and collecting the packet data from the one or more satellites; a shared buffer computer at the first location, in proximity to the receiver, for re-compiling the packet data into its original video file from beginning to completion; a plurality of Video-On-Demand servers, each at an independent location remote from the first location and associated with one of a plurality of Video-On-Demand operators, for distributing the video file to one or more Internet Protocol Television subscribers over an interactive communications network; and a plurality of Internet-based virtual private networks, each network being associated with one or more of the Video-On-Demand operators, for seamless linkage over the Internet of the shared buffer computer to the Video-On-Demand server associated with the one Video-On-Demand operator, over the respective remote locations.

In an embodiment, each virtual private network is tunneled through the Internet.
In another embodiment, each virtual private network operates over a dedicated or shared landline connection. In a still another embodiment, each virtual private network operates over a selected Internet protocol network connection suitable for supporting a virtual private network.

The first location can be geographically and topographically suitable for acquiring and collecting the packet data from the one or more satellites, and the second location is geographically and topographically less suitable than the first location for acquiring and collecting the packet data from the one or more satellites. The shared buffer computer can be associated with a first router for connection to the Internet, and each Video-On-Demand server is associated with a second router for connection to the Internet.

According to still another aspect of the invention, a virtual system for delivery of Video-On-Demand content comprises one or more communications satellites positioned and adapted for receiving and relaying packet data communications encapsulating a selected video file; a virtual private receiver at a first location for acquiring and collecting the packet data from the one or more satellites; a virtual private buffer computer at the first location, in proximity to the receiver, for re-compiling the packet data into its original video file from beginning to completion; and a plurality of Video-On-Demand servers, each at an independent location remote from the first location and associated with one of a plurality of Video-On-Demand operators, for distributing the video file to one or more Internet Protocol Television subscribers over an interactive communications network; and an Internet-based, virtual private network for seamless linkage of the virtual private buffer computer to the Video-On-Demand server over the respective remote locations. The system according to claim 18, wherein each virtual private network is tunneled through the Internet.

In an embodiment, each virtual private network operates over a dedicated or shared landline connection. In another embodiment, each virtual private network operates over a selected Internet protocol network connection suitable for supporting a virtual private network.

The first location can be geographically and topographically suitable for acquiring and collecting the packet data from the one or more satellites, and the second location is geographically and topographically less suitable than the first location for acquiring and collecting the packet data from the one or more satellites.

Accordingly, a method for delivery of Video-On-Demand content over a virtual Internet Protocol Television network, comprises the steps of:
i. positioning a satellite receiver at a first location for acquiring and collecting packet data communications, encapsulating a selected video file, from one or more communications satellites;
ii. placing a buffer computer at the first location, and in proximity to the receiver, for re-compiling the packet data into its original selected video file from beginning to completion;
iii. providing a network connection from the buffer computer to a global interactive communications network;
iv. arranging a Video-On-Demand server at a second location, remote from the first location, for distributing the video file to one or more Internet Protocol Television subscribers over an interactive communications network;
v. providing a secure network connection from the server to the global interactive communications network; and
vi. providing an Internet-based virtual private network for seamlessly linking the buffer computer to the Video-On-Demand server over the respective locations.

In a different aspect of the invention, a method for delivery of Video-On-Demand content over a virtual Internet Protocol Television network, comprises the steps of:
i. using a satellite receiver at a first location, acquiring and collecting packet data communications, encapsulating a selected video file, from one or more global communications satellites;
ii. transferring the data to a buffer computer placed at the first location, and in proximity to the receiver;
iii. using a buffer computer, re-compiling the packet data into its original video file from beginning to completion;
iv. transmitting the file through a router and over the Internet to a Video-On-Demand server arranged at a second location, remote from the first location;
v. through the server, distributing the video file to one or more Internet Protocol Television subscribers over an interactive communications network; and
vi. through an Internet-based Virtual Private Network, providing seamless linkage of the buffer computer to the Video-On-Demand server over the respective locations.

Various modifications and alterations to the present invention may be appreciated based on a review of this disclosure. These changes and additions are intended to be within the scope of this invention as defined by the claims.

## Claims

1. A virtual A virtual system for delivery of Video-On-Demand content, which comprises:
one or more communications satellites positioned and adapted for receiving and relaying packet data encapsuling one or more selected video files;
one or more receivers at a first location for acquiring and collecting the packet data from the one or more satellites;
at least one computer at the first location, being associated with and in proximity to a respective receiver, for re-compiling the packet data into its original video file from beginning to completion;
one or more Video-On-Demand servers, each at an independent location remote from the first location and associated with one or more Internet Protocol Television subscribers over an interactive communications network; and
one or more Internet-based virtual private networks for seamless linkage of a respective computers to the Video-On-Demand servers over the respective locations.

2. The virtual system of claim 1, wherein said one or more receivers are a satellite receiver, said at least one computer is a buffer computer, said one or more Video-On-Demand servers are a Video-On-Demand server, and said one or more Internet-based virtual private networks are an Internet-based virtual private network.

3. The virtual system according to claim 2, wherein the satellite receiver and buffer computer are associated with only one Video-On-Demand operator.

4. The virtual system according to claim 2, wherein the satellite receiver and buffer computer are shared by a plurality of Video-On-Demand operators, each Video-On-Demand operator having its own virtual private network.

5. The virtual system of claim 1, wherein said one or more receivers are a plurality of satellite receivers, said at least one computer is one or more buffer computers, and said one or more Video-On-Demand servers are a plurality of Video-On-Demand servers.

6. The virtual system of claim 1, wherein said one or more receivers are a shared receiver, said at least one computer is a shared buffer computer, said one or more Video-On-Demand servers are a plurality of Video-On-Demand servers, and said one or more Internet-based virtual private networks are a plurality of Internet-based virtual private networks.

7. The virtual system of claim 1, wherein said one or more receivers are a virtual private receiver, said at least one computer is a virtual private buffer computer, said one or more Video-On-Demand servers are a plurality of Video-On-Demand servers, and said one or more Internet-based virtual private networks are an Internet-based virtual private network.

8. The system according to any one of claims 5-7, wherein each virtual private network is tunneled through the Internet.

9. The system according to any one of claims 5-7, wherein each virtual private network operates over a dedicated or shared landline connection.

10. The system according to any one of claims 5-7, wherein each virtual private network operates over a selected Internet protocol network connection suitable for supporting a virtual private network.

11. The system according to any one of claims 2-4, 5, 6, or 7-10, wherein the first location is geographically and topographically suitable for acquiring and collecting the packet data from the one or more satellites, and the second location is geographically and topographically less suitable than the first location for acquiring and collecting the packet data from the one or more satellites

12. The system according to any one of claims 2-4, 5, 6, or 8-11, wherein the shared buffer computer is associated with a first router for connection to the Internet, and each Video-On-Demand server is associated with a second router for connection to the Internet.

13. A method for delivery of Video-On-Demand content over a virtual Internet Protocol Television network, which comprises the steps of:
using a satellite receiver at a first location, acquiring and collecting packet data communications, encapsulating a selected video file, from one or more global communication satellites;
transferring said packet data to a buffer computer placed at the first location, and in proximity to the receiver, the buffer computer being used for re-compiling the packet data into its original video file from beginning to completion;
transmitting the file to a Video-On-Demand server at a second location, over a global interactive communication network trough a secure network connection, and
distributing the video file to one or more Internet Protocol Television subscribers over said interactive communication network.

14. The method according to claim 13, wherein said secure network connection is an Internet-based Virtual Private Network, providing seamless linkage of the buffer computer to the Video-On-Demand server.

15. The method according to claim 13 or 14, wherein the transmission of the file to the Video-On-Demand Server is performed by a router.
